Europäisches Patentamt

European Patent Office

Office européen des brevets

(11) Veröffentlichungsnummer : **0 168 583**
**B1**

(12) **EUROPÄISCHE PATENTSCHRIFT**

(45) Veröffentlichungstag der Patentschrift :
19.10.88

(51) Int. Cl.⁴ : **G 01 S   3/72, G 01 S   3/48**

(21) Anmeldenummer : 85105900.6

(22) Anmeldetag : 14.05.85

(54) Interferometerpeilanordnung.

(30) Priorität : 24.05.84 DE 3419345

(43) Veröffentlichungstag der Anmeldung :
22.01.86 Patentblatt 86/04

(45) Bekanntmachung des Hinweises auf die Patenterteilung : 19.10.88 Patentblatt 88/42

(84) Benannte Vertragsstaaten :
CH DE FR GB IT LI

(56) Entgegenhaltungen :
DE-B- 1 246 054
FR-A- 2 520 511
US-A- 2 421 009
US-A- 4 387 376

(73) Patentinhaber : Licentia Patent-Verwaltungs-GmbH
Theodor-Stern-Kai 1
D-6000 Frankfurt/Main 70 (DE)

(72) Erfinder : Bodemann, Gerhard, Dipl.-Ing.
Eichengrund 101
D-7900 Ulm (DE)
Erfinder : Saur, Hermann, Dipl.-Ing. (FH)
Hölderlinweg 3
D-7900 Ulm (DE)

(74) Vertreter : Schulze, Harald Rudolf, Dipl.-Ing. et al
Licentia Patent-Verwaltungs-GmbH Theodor-Stern-Kai 1
D-6000 Frankfurt/Main 70 (DE)

## Beschreibung

Die Erfindung betrifft eine Interferometerpeilanordnung der im Oberbegriff des Patentanspruchs 1 angegebenen Art.

Interferometerpeilanordnungen ermitteln aus Phasendifferenzen zwischen Antennenspannungen räumlich getrennt aufgestellter Peilantennen entsprechend Laufzeitdifferenzen einfallender Wellen zwischen den Antennen die Einfallsrichtungen der empfangenen Signale, wobei die Auswerteverfahren vorteilhafterweise auch ohne Zusatzaufwand eine Information über den Elevationswinkel der Einfallsrichtung ergeben. Dieses Peilverfahren erlaubt eine große Antennenapertur ($> \lambda$) und ist daher auch geeignet für Peilsituationen, in denen mit steil einfallenden Wellen beispielsweise nach Reflexion in ionosphärischen Schichten zu rechnen ist. Gebräuchliche Linearantennen können dabei häufig nicht zufriedenstellen.

Der Erfindung liegt die Aufgabe zugrunde, eine Interferometeranordnung der eingangs genannten Art anzugeben, die mit einfachen Mitteln eine Anpassung der Peilanordnung an die unterschiedlichen Peilsituationen ermöglicht.

Die Erfindung ist im Patentanspruch 1 definiert. Die Unteransprüche enthalten vorteilhafte Ausführungen und Weiterbildungen der Erfindung.

Bei steil einfallenden Wellen sind Antennenelemente vorteilhaft, deren Strahlungsdiagramm nach oben gerichtet ist. Rahmenantennen sind für diese Aufgabe besonders geeignet, da sie ein solches Strahlungsdiagramm aufweisen und kleine Abmessungen besitzen. Der Nachteil der Rahmenantennen ist die relativ schlechte Empfindlichkeit im Vergleich zu Linearantennen. Bei Peilsituationen mit flachem Einfallswinkel ist deshalb eine Linearantenne besser geeignet als eine Rahmenantenne.

Bei flachem Einfallswinkel und gestörtem Empfang bietet ein Kreuzrahmen wiederum Vorteile gegenüber der Linearantenne, da durch geeignete Wahl des Rahmenelements ein Nutzsender gegenüber einem Störer bevorzugt empfangen werden kann.

Die Erfindung ermöglicht in allen Peilsituationen einen angepaßten Betrieb durch Wahl einer der drei Einzelantennen pro Peilantenne. Dabei werden zumindest bei allen gleichzeitig an den Empfänger angeschlossenen Peilantennen die Antennen mit gleicher Richtcharakteristik ausgewählt. Auch bei zirkularer Polarisation, die besonders bei steil einfallenden Wellen auftritt, ergibt die Verwendung der aktiven Rahmenantennen unabhängig vom Drehsinn der zirkular polarisierten Welle gute Empfangseigenschaften. Die Verwendung zweier gekreuzter Rahmenantennen die durch Zusammenfassung der beiden Rahmenspannungen über ein 90°-Hybrid eine zirkular polarisierte Empfangscharakteristik aufweisen, ergibt für den Fall, daß die Polarisation der einfallenden Welle den gleichen Drehsinn aufweist wie die Rahmenanordnung, zwar gegenüber der erfindungsgemäßen Anordnung einen Gewinn von bis zu 3 dB, erfordert aber den Einsatz teurer Bauelemente (Hybrids) und birgt die Gefahr, daß Polarisations-Drehsinn von einfallender Welle und Kreuzrahmenanordnung entgegengesetzt sind und eine starke Signaldämpfung auftritt. Die Antennenspannungen der Rahmenantennen können jedoch derart zusammengefaßt werden, daß eine azimutunabhängige Rundspannung erzeugt wird.

Bei einer vorteilhaften Ausführung, die die Anzahl der Antennenkabel reduziert, führt von jeder Peilantenne nur eine Verbindungsleitung zum Empfänger. Die Ausgänge der aktiven Linearantenne als auch der Rahmenantennen können wahlweise an das Antennenkabel angeschaltet werden. Der Anschluß einer der drei Einzelantennen pro Peilantenne an die Verbindungsleitung erfolgt über fernbetätigte Schaltmittel, die direkt bei der Peilantenne angeordnet sind. Die Rahmenantennen sind vorteilhaftweise als aktive Rahmenantennen ausgeführt.

Bevorzugterweise werden die Gleichstromversorgung der Antennenverstärker und die Steuersignale für die Schaltmittel auf derselben Leitung geführt, die zur Übertragung der hochfrequenten Antennenspannungen zum Empfänger vorhanden ist. Aktive Linearantennen sind an sich beispielsweise aus der DE-OS 2 446 631, aktive Rahmenantennen aus der DE-OS 2 952 160 bekannt.

## Patentansprüche

1. Interferometerpeilanordnung mit einer Mehrzahl räumlich getrennt aufgestellter gleicher Peilantennen, die über Verbindungsleitungen mit einem Empfänger verbunden sind, dadurch gekennzeichnet, daß die Peilantennen jeweils aus einer Kombination von Einzelantennen gebildet sind, welche jeweils aus zwei gekreuzten Rahmenantennen und einer aktiven vertikalen Linearantenne bestehen und daß Schaltmittel zum wahlweisen Anschluß von Einzelantennen einer Art an den Empfänger vorhanden sind.

2. Anordnung nach Anspruch 1, dadurch gekennzeichnet, daß am Ort jeder Peilantenne Mittel zur Zusammenfassung der Antennenspannungen der Rahmenantennen zu einer azimutunabhängigen Rundspannung vorgesehen sind.

3. Anordnung nach Anspruch 1, dadurch gekennzeichnet, daß zu jeder Peilantenne nur ein Verbindungskabel führt, und daß bei jeder Peilantenne fernbetätigte Schaltmittel zum Anschalten einer der beiden Rahmenantennen oder der Linearantenne an den Empfänger angeordnet sind.

4. Anordnung nach einem der Ansprüche 1 bis 3, dadurch gekennzeichnet, daß die Steuersignale für die Fernbetätigung der Schaltmittel die Stromversorgung der Fußpunktverstärker der aktiven Antennen und die Antennenspannungen auf einer gemeinsamen Koaxialleitung übertragen werden.

## Claims

1. Interferometric direction-finding arrangement with a plurality of like direction-finding aerials, which are set up spatially separated and connected by way of receiving lines with a receiver, characterised thereby, that the direction-finding aerials are each formed of a combination of individual aerials which each consist of two crossed frame aerials and an active vertical linear aerial and that switching means for the selectable connection of individual aerials of one kind to the receiver are present.

2. Arrangement according to claim 1, characterised thereby, that means for the combination of the aerial voltages of the frame aerials into a circular voltage dependent on azimuth are provided at the location of each direction-finding aerial.

3. Arrangement according to claim 1, characterised thereby, that only one connecting cable leads to each direction-finding aerial and that remotely actuated switching means for the switching of one of both the frame aerials or of the linear aerial to the receiver are arranged at each direction-finding aerial.

4. Arrangement according to one of the claims 1 to 3, characterised thereby, that the control signals for the remote actuation of the switching means, the current supply of the base amplifiers of the active aerials and the aerial voltages are transmitted on a common co-axial line.

## Revendications

1. Dispositif de radiogoniométrie interférométrique, comprenant un certain nombre d'antennes radiogoniométriques identiques disposées à distance les unes des autres dans l'espace et qui sont reliées par des lignes de raccordement à un récepteur, caractérisé en ce que les antennes radiogoniométriques sont formées chacune par une combinaison d'antennes élémentaires constituées par deux antennes-cadres croisées et par une antenne linéaire verticale, active, et que des moyens de couplage sont prévus pour la connexion sélective d'antennes élémentaires d'un type au récepteur.

2. Dispositif selon la revendication 1, caractérisé par la prévision, au droit de chaque antenne radiogoniométrique, de moyens pour réunir les tensions d'antenne des antennes-cadres en une tension circulaire indépendante de l'azimut.

3. Dispositif selon la revendication 1, caractérisé en ce qu'un seul câble de raccordement mène à chaque antenne radiogoniométrique et que des moyens de couplage télécommandés sont disposés auprès de chaque antenne radiogoniométrique pour la connexion d'une des deux antennes-cadres ou de l'antenne linéaire au récepteur.

4. Dispositif selon l'une des revendications 1 à 3, caractérisé en ce que les signaux de commande pour la télécommande des moyens de couplage, l'alimentation électrique des amplificateurs de base des antennes actives et les tensions d'antenne sont transmises sur une ligne coaxiale commune.